**Europäisches Patentamt**

**European Patent Office**

**Office européen des brevets**

(19)

(11) Veröffentlichungsnummer: **0 176 910**
**A1**

(12) # EUROPÄISCHE PATENTANMELDUNG

(21) Anmeldenummer: **85112023.8**

(22) Anmeldetag: **23.09.85**

(51) Int. Cl.⁴: **G 06 K 9/32**

(30) Priorität: **27.09.84 DE 3435525**

(43) Veröffentlichungstag der Anmeldung:
**09.04.86 Patentblatt 86/15**

(84) Benannte Vertragsstaaten:
**AT CH DE FR GB IT LI**

(71) Anmelder: **Siemens Aktiengesellschaft**
**Berlin und München Wittelsbacherplatz 2**
**D-8000 München 2(DE)**

(72) Erfinder: **Postl, Wolfgang, Dipl.-Ing.**
**Edelweissstrasse 11**
**D-8137 Berg(DE)**

(54) **Verfahren zur automatischen Schräglagenkorrektur bei der Erfassung einer Textvorlage in Form digitaler Abtastwerte.**

(57) Die Abtastwerte werden vor ihrer Weiterverarbeitung in einem ersten Schritt einer Schräglagenermittlung und in einem zweiten Schritt einer elektronischen Drehung interzogen. Der Winkel der Schräglage wird nach einem vorgegebenen Optimierungsverfahren durch Generieren einer Folge systematisch ausgewählter Suchwinkel $\alpha_i$ (i=0,1,...) und diesen Suchwinkeln zugeordneter Richtkriterien $K_i$ ermittelt und für die elektronische Drehung verwendet. Vorzugsweise wird als Optimierungsverfahren eine Intervallschachtelung verwendet.

FIG 1

EP 0 176 910 A1

SIEMENS AKTIENGESELLSCHAFT

Berlin und München

Verfahren zur automatischen Schräglagenkorrektur
bei der Erfassung einer Textvorlage in Form digitaler Abtastwerte

Die vorliegende Erfindung betrifft ein Verfahren zur automatischen Schräglagenkorrektur bei der Erfassung einer Textvorlage in Form digitaler Abtastwerte zum Zweck einer Weiterverarbeitung.

Bei der punkt- und zeilenweisen Erfassung von Textdokumenten mit Hilfe eines elektronischen Abtasters ist nicht immer gewährleistet, daß die Textzeilen genau parallel zur Abtastrichtung verlaufen. Eine Schräglage relativ zur Abtastrichtung (im folgenden kurz als "Schräglage" bezeichnet) kann vorzugsweise dann auftreten, wenn der Abtaster als Übertisch-Kamera oder Buchabtaster ausgeführt und die Vorlage auf dem Tisch bzw. der Auflage frei verschiebbar ist. Die Positionierung mit Hilfe von Marken ist ungenau und mit Hilfe von Anschlägen allenfalls bei Einzelblattvorlagen, kaum aber bei Buchvorlagen oder Zeitschriften möglich. Abtaster mit automatischer Einzugsvorrichtung können – wenn diese be-nützt wird – ohnehin nur Einzelblattvorlagen verarbeiten.

Eine de-facto-Schräglage ist auch dann gegeben, wenn die Vorlage zwar kantenparallel abgetastet wird, aber selbst die Kopie einer schräg abgetasteten Vorlage ist.

Durch Schräglage bei der Abtastung wird zwar in vielen Fällen lediglich die Reproduktion der abgetasteten Vorlage in ästhetischer Hinsicht beeinträchtigt; sie kann jedoch erheblich stören, wenn der Abtastung eine strukturelle oder semantische Analyse der Abtastdaten nachgeschaltet ist. Beispielsweise vertragen typische Zeichenerkennungsverfahren nur eine beschränkte Schräge der Vorlage, u.a. wegen des Problems, Textzeilen zu isolieren. Darüber hinaus beeinträchtigt oder kompliziert (bzw. verlangsamt oder verteuert) eine Schräglage jedes Verfahren zur Erfassung horizontaler und vertikaler Strukturen, z.B. dunkler Striche in Formularen, Unterstreichungen in maschinegeschriebenen Texten, und von weißen Berandungen, die als Kriterien für die Begrenzung von Text- und Bildbereichen verwendet werden können. Dabei könnten sich bereits geringe Schräglagen störend auswirken, wenn z.B. größere Abbildungen als Einheit identifiziert werden sollen. Die genannten Probleme löst das im folgenden beschriebene Verfahren unter der Voraussetzung, daß die Vorlage ausgeprägte Horizontal- und/oder Vertikalstrukturen aufweist. Dies wird jedoch gerade für diejenige Klasse von Vorlagen zutreffen, für die eine Schräglage unerwünscht ist.

Der vorliegenden Erfindung liegt die Aufgabe zugrunde, ein Verfahren zur automatischen Schräglagenkorrektur bei der Erfassung einer Textvorlage in Form digitaler Abtastwerte zum Zwecke einer Weiterverarbeitung zu schaffen, das die zuvor genannten Nachteile bei Verfahren nach dem Stand der Technik vermeidet und das sich in besonders vorteilhafter Weise mit einer Einrichtung, die mit einer bekannten Einrichtung mit zumindest einem Bildspeicher und einem Bildschirm zusammenwirkt, durchführen läßt.

Die der Erfindung zugrundeliegende Aufgabe wird durch ein Verfahren der eingangs genannten Art beziehungsweise nach dem Oberbegriff des Patentanspruchs 1 gelöst, das durch die in dessen kennzeichnendem Teil angegebenen Merkmale charakterisiert ist.

Vorteilhafte Weiterbildungen der Erfindung sind durch die in den Unteransprüchen angegebenen Merkmale gekennzeichnet.

Im folgenden wird die Erfindung anhand mehrerer Figuren im einzelnen beschrieben.

Fig. 1    zeigt schematisch in Draufsicht den von einem Abtastsystem (etwa einer in der Position des Betrachters montierten Kamera) erfaßten Vorlagenbereich B mit einer schräg aufgelegten Vorlage V.

Fig. 2    stellt die um 90° gedrehte und gespiegelte obere Halbebene des Bereichs der Fouriertransformierten der Vorlage dar.

Fig. 3    zeigt ein Flußdiagramm der einzelnen Verfahrensschritte eines bestimmten Abschnitts des erfindungsgemäßen Verfahrens.

Fig. 4  zeigt ein Blockschaltbild einer Schaltungsanordnung gemäß einem bevorzugten Ausführungsbeispiel für eine Einrichtung zur Durchführung des erfindungsgemäßen Verfahrens.

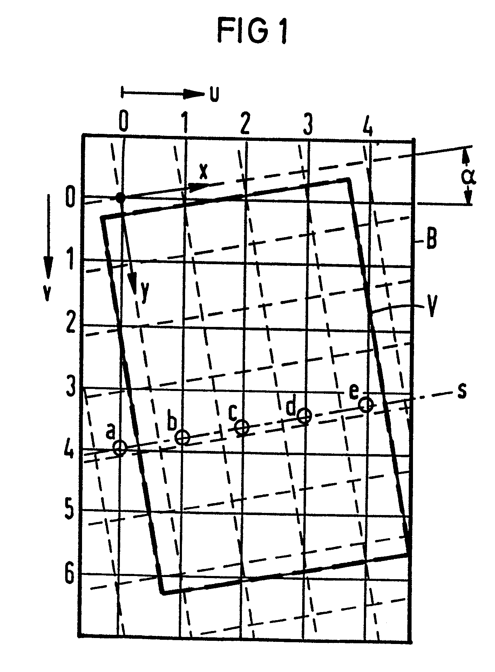

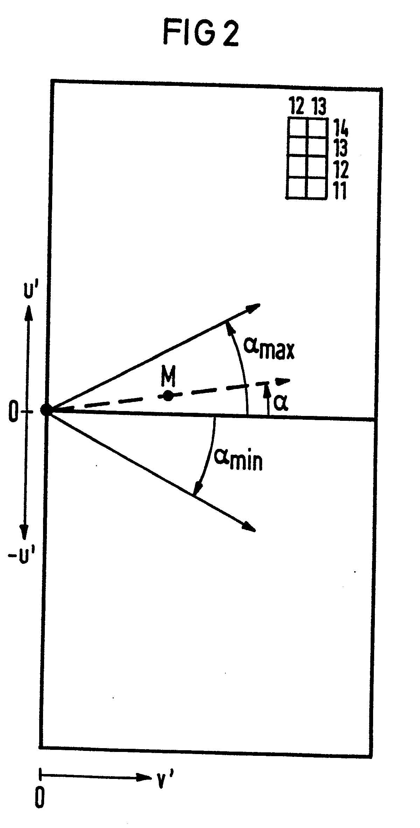

Das erfindungsgemäße Verfahren setzt eine konventionelle punkt- und zeilenweise Erfassung der Vorlage voraus: Eine geeignete Abtasteinrichtung (Scanner, Kamera) tastet den Abtastbereich, in dem sich die Vorlage befindet, mit einer Auflösung von Z Zeilen und S Punkten pro Zeile ab und liefert als deren Ergebnis der angeschlossenen Erfassungseinrichtung S×Z digitale oder analoge Abtastwerte $A(u,v)$; u und v sind die Koordinaten des Abtastsystems, d.h. v bedeutet die Nummer der Abtastzeile und u die Nummer eines Abtastpunktes innerhalb einer Zeile, wobei u von links nach rechts und v von oben nach unten gezählt wird, jeweils beginnend mit der Nummer 0, so daß $0 \leq u \leq S-1$ und $0 \leq v \leq Z-1$. Die Reihenfolge, in der die Abtastwerte geliefert werden, ist für das Verfahren weitgehend irrelevant; ggf. ist eine Zwischenspeicherung erforderlich. Mit den im folgenden verwendeten Bezeichnungen du und dv ist der horizontale bzw. vertikale Abstand benachbarter Abtastpunkte gemeint, die verschieden sein können. Beispielsweise ist bei einem Gruppe-3-Faksimile gemäß den Normen des CCITT du=1/8 mm und dv=1/7,7 mm. Neuere Normvorschläge sehen jedoch du=dv vor. Diese Annahme liegt auch den Darstellungen Fig. 1 und Fig. 2 zugrunde.

Fig. 1 zeigt, wie bereits erläutert, schematisch in Draufsicht den von dem Abtastsystem (etwa einer in der Position des Betrachters montierten Kamera) erfaßten Vorlagenbereich B mit einer schräg aufgelegten Vorlage V. Die Kreuzungspunkte des eingezeichneten Netzes für die Koordinaten u und v entsprechen Abtastpunkten, wobei Z=7 und S=5. Zusätzlich ist (gestrichelt) ein Netz für gedrehte Koordinaten x und y eingezeichnet, dessen Bedeutung unten erläutert wird. Fig. 1 ist ebenso als Darstellung eines Bildspeichers zu betrachten, in den die Abtastwerte nach deren Erfassung eingelesen werden, wobei die Kreuzungspunkte des (u,v)-Netzes Speicherzellen entsprechen.

Das Verfahren gliedert sich in die beiden im folgenden beschriebenen Schritte "Schräglagenermittlung" und "elektronische Drehung", wobei es unerheblich ist, ob sie auf die vom Abtaster ausgegebenen Abtastwerte unmittelbar oder nach Zwischenspeicherung angewandt werden. Eine beschränkte Zwischenspeicherung ist jedoch im allgemeinen auch im ersten Fall erforderlich.

Außerdem wird, sofern in einem Verfahrensschritt wiederholt auf die gleichen Abtastwerte zurückgegriffen werden muß, eine mehrfache Wiederholung der Abtastung in Betracht gezogen. Dabei ist jedoch zu berücksichtigen, daß auf Grund nicht reproduzierbarer Ungenauigkeiten des Abtasters verschiedene Abtastvorgänge geringfügig verschiedene Werte für identische Punkte liefern werden.

Verfahrensschritt Schräglagenermittlung

In diesem Schritt wird durch Analyse des Abtastsignals der Winkel $\alpha$ der Schräglage ermittelt. Im folgenden werden zwei alternative Verfahren beschrieben.

Verfahrensschritt elektronische Drehung

Aus den von dem Abtaster gelieferten Abtastwerten A(u,v) werden Punkt für Punkt und Zeile für Zeile "gedrehte" Abtastwerte B(x,y) entsprechend folgender Beziehung erzeugt:

$$B(x,y) = A(u,v) \tag{1}$$

wo
$$u = x\cos\alpha + y\sin\alpha + u^* \tag{2}$$
$$v = y\cos\alpha - x\sin\alpha + v^* \tag{3}$$

Ein positiver Wert von $\alpha$ bedeutet Gegenuhrzeigersinn. Die Verschiebungen $u^*$ und $v^*$ können automatisch oder manuell, ggf. abhängig von $\alpha$, so gewählt werden, daß die Werte B(x,y) im gleichen Speicher wie die A(u,v) abgelegt werden, d.h. das ursprüngliche Faksimile wird durch das gedrehte überschrieben. Jede Wertefolge B(0,y), B(1,y),...B(S-1,y) stellt die Abtastwerte einer simulierten Schrägabtastung unter dem Winkel $\alpha$ dar. Das in Fig. 1 schräg gestrichelt gezeichnete Koordinatennetz zeigt eine solche simulierte Schrägabtastung. Die Kreuzungspunkte entsprechen Punkten mit ganzzahligen Werten von x und y. Es wurde $u^*=v^*=0$ angenommen.

Die durch GL. (2) und (3) für ganzzahlige x und y gegebenen Werte u und v sind jedoch im allgemeinen nicht ganzzahlig. In diesem Fall sind zwei alternative Maßnahmen vorgesehen:

a) u und v werden auf ganze Zahlen gerundet

b) $B(x,y)$ wird durch Interpolation aus der Umgebung von u und v ermittelt, z.B. mit Hilfe einer Schaltung, die folgende Beziehung realisiert:

$$B(x,y) = A(u_0,v_0) +$$
$$+ [A(u_1,v_0) - A(u_0,v_0)] \times (u - u_0) +$$
$$+ [A(u_0,v_1) - A(u_0,v_0)] \times (v - v_0) + \qquad (4)$$
$$+ [A(u_1,v_1) - A(u_0,v_0)] \times (u - u_0) \times (v - v_0),$$

wobei $u_1$ und $v_1$ durch Aufrunden, $u_0$ und $v_0$ durch Abrunden von u bzw. v auf ganzzahlige Werte erzeugt worden sind.

Sollten sich Wertepaare (u,v) ergeben, die nicht im Abtastbereich liegen, so kann das jeweilige $B(x,y)$ auf einen vordefinierten Wert — etwa den Weißwert — gesetzt werden.

Falls die "gedrehten" Abtastwerte $B(x,y)$ bei der späteren Verarbeitung mehrfach benötigt werden, speichert man sie nach der ersten Drehung. Sie muß dann nicht wiederholt werden.

Für die Speicherung ursprünglicher oder gedrehter Abtastwerte werden beliebige Kompressionsverfahren in Betracht gezogen, insbesondere Lauflängencodes wie beschrieben in Standardization of Group 3 Facsimile Apparatus for Document Transmission. T4, CCITT Yellow Book 1981, pp. 222-236.

Beide Verfahrensschritte können ggf. zur Beschleunigung auf Teilbereiche der Vorlage bzw. auf eine Untermenge der betroffenen Abtastwerte beschränkt werden. Insbesondere kommt in Betracht, die Schräglagenermittlung auf solche Teilbereiche zu beschränken, von denen vorbekannt ist, daß sie ausgeprägte horizontale bzw. vertikale Strukturen enthalten, und Bereiche ohne solche Strukturen auszuschließen. Die Auswahl der Untermenge kann auch darin bestehen, daß nur jeder d-te Abtastwert jeder h-ten Zeile verwendet wird, wobei d und h irgendwelche natürliche Zahlen sind.

Ferner kann es sinnvoll sein, die elektronische Drehung auf solche Bereiche zu beschränken, die nach der Drehung in einen vorgegebenen Bereich der Koordinaten (x,y) fallen.

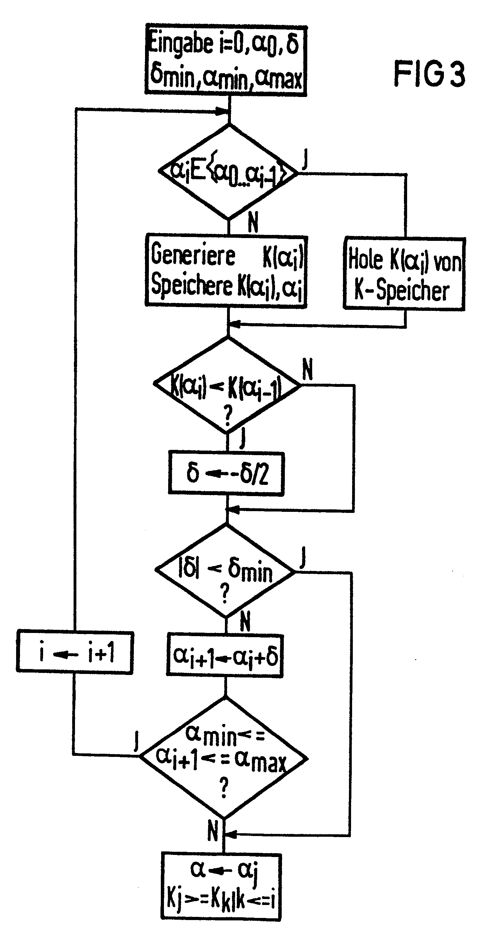

Die beiden Verfahren zur automatischen Schräglagenermittlung, die zuvor genannt wurden, werden im folgenden als "Suchabtastverfahren" und "Suchstrahlverfahren" bezeichnet. Beide haben gemeinsam, daß für eine Folge systematisch ausgewählter Suchwinkel $\alpha_i$ (i=0,1,...) Richtkriterien $K_i$ generiert werden und daß durch Auswertung der Richtkriterien $K_0...K_i$ und der entsprechenden Winkel der nächste Abtastwinkel $\alpha_{i+1}$ generiert und mit diesem die nächste simulierte Abtastung gestartet wird. Vor jeder Abtastsimulation wird außerdem ein Abbruchkriterium erzeugt, das signalisiert, ob die Suche beendet werden soll. In diesem Fall wird im allgemeinen der nach Maßgabe des Richtkriteriums beste der bisher erzeugten Suchwinkel $\alpha_i$ für die elektronische Drehung verwendet. Ein Suchverfahren, das den – nach einem vorgegebenem Kriterium – besten aus einer Vielzahl technisch realisierbarer Schaltungsparameter ermittelt, wird im folgenden unter Verwendung eines in der numerischen Mathematik üblichen Begriffs als "Optimierung" bezeichnet. Ein besonders einfach realisierbares Verfahren (Intervallschachtelung) ist durch ein Flußdiagramm in Fig. 3 dargestellt. Das Abbruchkriterium besteht darin, daß entweder ein während der Optimierung veränderter Parameter $\delta$ einen Grenzwert $\delta_{min}$ unterschreitet oder daß der Suchwinkel $\alpha_i$ einen unteren Grenzwert $\alpha_{min}$ unter- oder einen oberen Grenzwert $\alpha_{max}$) überschreitet. Die Werte der Parameter $\delta$, $\delta_{min}$, $\alpha_{min}$, $\alpha_{max}$ sowie der Anfangswert $\alpha_0$ – praktisch ein Schätzwert für die Schräglage – sind beim Beginn der Optimierung der Einrichtung, die das Suchverfahren realisiert, zu übergeben.

Suchabtastverfahren

Für jeden Suchwinkel $\alpha_i$ wird eine Schrägabtastung simuliert, die einer elektronischen Drehung gemäß Gl. (2) und (3) entspricht, jedoch mit dem Winkel $\alpha_i$ an Stelle von $\alpha$.

Für jede "gedrehte" Zeile (Suchzeile), beginnend im allgemeinen mit y=0, wird die Summe der Abtastwerte längs dieser Zeile, der von y abhängige Wert

$$S(y) = \sum_x B(x,y) \qquad (5)$$

oder ein Näherungswert dieser Summe erzeugt und gespeichert. Vor der Speicherung der zweiten und jeder folgenden dieser Summen wird eine gerade, monoton nichtabnehmende Funktion der Differenz zwischen dieser und der zuletzt gespeicherten Summe, vorzugsweise ihr Quadrat

$$Q(y) = (S(y) - S(y-1))^2 \qquad (6)$$

gebildet und zum Inhalt eines Registers addiert, das vor Beginn der jeweiligen Suchabtastung auf den Wert 0 gesetzt wurde. Nach ihrem Ende enthält es den gesuchten Wert des Richtkriteriums $K_i$.

Die Suchabtastung darf unter – verglichen mit der elektronischen Drehung – vereinfachten Bedingungen ablaufen. Die Vereinfachung kann z.B. darin bestehen, daß die Drehung durch eine Scherung ersetzt wird entsprechend dem Ersatz von Gl. (2) und (3) durch

$$u = x\cos\alpha \qquad (7)$$

$$v = y - x\sin\alpha \qquad (8)$$

Bei kleinen Winkeln ist es darüber hinaus zulässig, $\cos\alpha$ durch 1 und $\sin\alpha$ durch $\tan\alpha$ zu ersetzen.

Die in Fig. 1 mit s bezeichnete Linie stellt die Spur einer solchen Scherung für die simulierte Abtastzeile $y=4$ dar. Die Punkte a bis e entsprechen den simulierten Abtastpunkten mit den Koordinaten $(0,4)$ bis $(4,4)$.

Eine Verfahrensvariante zur Summenbildung entsprechend Gl. (5) besteht darin, daß mit Hilfe eines Lauflängendetektors LD für jede Zeile Folgen von Schwarzlängen in Gestalt digitaler Datenworte ermittelt werden und daß diese Datenworte einem Addierer zugeführt werden. Falls die dem Abtaster nachgeschaltete Erfassungseinrichtung aus irgend einem Grund, z.B. zur Erzeugung eines Lauflängencode nach Standardization of Group 3 Facsimile Apparatus for Document Transmission. T4, CCITT Yellow Book 1981, pp. 222–236, über einen Lauflängendetektor verfügt, kann dieser auch für die Summenbildung nach Gl. (5) in Anspruch genommen werden.

Suchstrahlverfahren.

Das Verfahren besteht selbst aus zwei Schritten, nämlich aus einer Fouriertransformation und einer Suchstrahlanalyse.

Fouriertransformation

Durch eine zweidimensionale Fouriertransformation, z.B. unter Verwendung besonderer Prozessoren, die heute in vielen Varianten im Handel erhältlich sind, und deren Wirkungsweise auf der sog. "schnellen" Fouriertransformation beruht, werden aus den Abtastwerten $A(u,v)$ komplexe Fourierkoeffizienten $A'(u',v')$ gebildet, die durch die Gleichung

$$A'(u',v') = \sum_{u,v} A_{u,v} e^{j2\pi(uu'/U+vv'/V)} \tag{9}$$

gegeben sind. Daraus werden die Koeffizienten des Fourier-Leistungsspektrums

$$L(u',v') = |A'(u',v')|^2 \tag{10}$$

erzeugt und in einem Speicher (Spektrumspeicher) abgelegt.

Fig. 2 stellt die um 90° gedrehte und gespiegelte obere $(u',v')$- Halbebene dar. Sie kann gleichermaßen als schematische Darstellung des Spektrumspeichers betrachtet werden. In Fig. 2 sind 6 Speicherzellen mit den zugehörigen $u'$- und $v'$-Werten dargestellt. Erfahrungsgemäß genügt eine Speicherung von $L(u',v')$ mit einer Genauigkeit von 8 bis 16 bit pro Wert.

Die Zahlen U und V in Gl. (9) werden vorzugsweise identisch gewählt, d.h. U=V=N, wobei N eine Potenz von 2 ist, die ≥Z und ≥S ist. U und V dürfen jedoch auch kleiner sein, wenn

a)   der $(u,v)$-Bereich, über den die Summierung durchgeführt wird, nur ein Teilbereich der Vorlage oder des Abtastbereichs ist - er kann z.B., wie oben festgestellt wurde, mit einem Bereich identisch sein, der ausgeprägte Horizontal- und/oder Vertikalstrukturen enthält -

b)   wenn man bereit ist, einen Fehler in Kauf zu nehmen, der durch zu kleine U und V verursacht wird. Dieser wirkt sich so aus, als würde anstelle der Vorlage eine periodische additive Überlagerung (Übereinanderkopie) der

Vorlage ausgewertet, wobei die Periode in x—Richtung U×du und in y—Richtung V×dv ist.

Wie aus Fig. 2 klar ersichtlich, ist es im allgemeinen nicht erforderlich, die Erzeugung und Speicherung von L(u′,v′) für die gesamte Halbebene durchzuführen; vielmehr genügt der durch den gezeichneten Sektor markierte Teilbereich.

Suchstrahlanalyse

Für jeden Suchwinkel $\alpha_i$ wird längs eines Suchstrahls, der mit der Ordinate v′ den Winkel $\alpha_i$ einschließt, die durch die gespeicherten Koeffizienten L(u′,v′) gegebene spektrale Leistungsdichte integriert. In Fig. 2 ist je ein Suchstrahl für die Grenzwinkel $\alpha_{min}$ und $\alpha_{max}$ sowie für den (gesuchten) Schräglagewinkel $\alpha$ eingezeichnet. Die Integration kann ggf. auf einen oder mehrere Teilbereiche des Suchstrahls beschränkt werden, bei Textvorlagen mit einheitlichem Zeilenabstand z.B. auf die Umgebung des in Fig. 2 eingezeichneten Maximums M, dessen Abstand $r_M$ vom Punkt (0,0) durch

$$r_M = N \times du/dz \tag{11}$$

gegeben ist, wobei dz der Textzeilenabstand ist. In Fig. 2 hat $r_M$ etwa den Wert 6; mit N=2048, du=(1/200)″, und dz=(1/4)″ wäre $r_M$=41.

Die Realisierung der Integration kann nach dem Vorbild beliebiger mathematischer Verfahren, beispielsweise durch die Summierung von Proben aus dem Spektrumspeicher entsprechend der Formel

$$K = \sum_{u',v'} A(u',v') \mid v' = R(s); u' = v'\sin\alpha \tag{12}$$

wobei R(s) eine Folge ganzer Zahlen im Bereich relevanter Spektraldichte ist, bei dem erwähnten Beispiel etwa der Bereich 35..45. Ähnlich wie im Falle des "Suchabtastverfahrens" ergibt sich dabei das Problem, daß die Werte v′sin$\alpha$ im allgemeinen nicht ganzzahlig sind. Wie dort kann dieses Problem entsprechend dem für die elektronische Drehung vorgesehene Verfahren entweder durch Runden oder durch Interpolation umgangen werden.

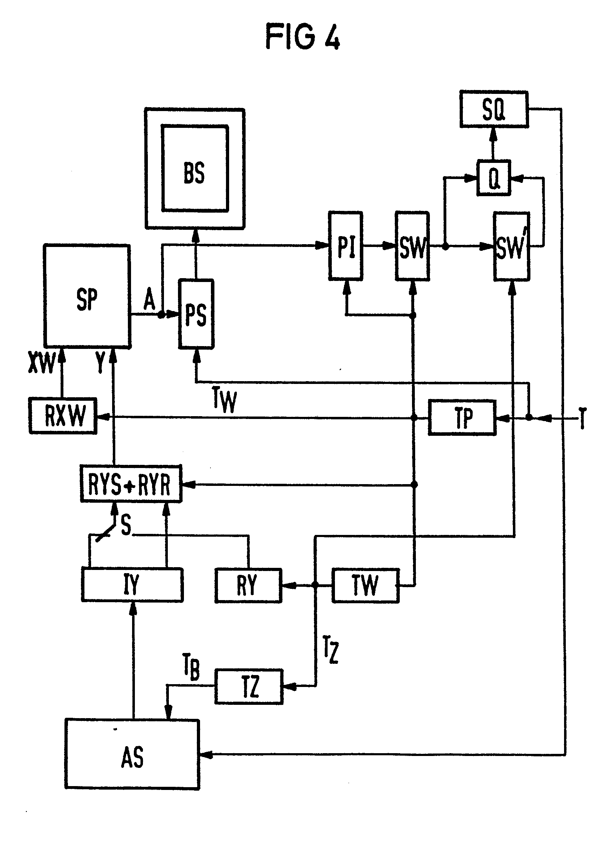

Fig. 4 zeigt eine einfache Schaltung zur Erzeugung des Richtkriteriums nach dem "Suchabtastverfahren", die mit einer üblichen Schaltung zur Speicherung und Bildschirmausgabe eines Binärbildes (1 bit=1 Punkt) kombiniert ist. Zur Beschreibung dieser Schaltung wird der Zeitbedarf für Zeilen- und Bildrücklauf der Einfachheit halber mit 0 angenommen. Die Bezeichnungen beziehen sich auf die obige Beschreibung sowie auf das Flußdiagramm gemäß Fig. 3.

Ein Bildwiederholspeicher SP hat zwei Adreßeingänge XW und Y und einen Ausgang A. An XW wird die Adresse eines X-Wortes, das $n_X$ (z.B. 16) horizontal aufeinanderfolgende Bildpunkte enthält, und an Y die Adresse einer Bildzeile geführt. Von A werden die $n_X$ Bits des X-Wortes parallel an einen Parallel-Serien-Umsetzer PS übergeben und von dort an einen Monitor BS ausgelesen.

Die Wortbreite der Eingänge XW und Y ($n_{XW}$ bzw. $n_Y$) beträgt z.B. bei einer Bildschirmgröße von 1024×1024 Bildpunkten 6 bzw. 10 bit.

Das Auslesen von PS wird von einem Bildpunkt-Takt T gesteuert. T wird durch einen Punktteiler TP im Verhältnis $n_X$:1 auf den Worttakt Tp heruntergeteilt. Dieser wird einerseits einem X-Wort-Zählregister RXW, dessen Stand sich mit jedem Taktimpuls um 1 erhöht, andererseits einem Schrägabtastregister (RYS+RYR) – einem Addierer, der aus der Kaskadierung des Y-Statusregisters RYS (die oberen $n_Y$ Stellen) mit dem Restregister RYR (die unteren $n_Y$ Stellen) besteht – zugeführt. RYS wird an den y-Eingang von SP geführt. Mit jedem Taktimpuls von Tp wird der Inhalt eines Y-Inkrementregisters IY zu (RYS+RYR) addiert.

Im normalen Bildausgabebetrieb sind die Eingänge von RYS über einen Schalter S mit einem Y-Register RY verbunden. Sein Stand erhöht sich um 1 mit jedem Impuls des Zeilentakts $T_Z$, der vom Worttakt Tp durch einen Wortteiler TW (Verhältnis $s$:$n_X$, wenn s die Punktzahl pro Zeile ist) abgeleitet wird. Bei einer Suchabtastung unter dem Suchwinkel $\alpha_i$ wird IY von einer Abtaststeuerung AS vor Beginn der Suchabtastung mit dem Datenwort $s_y = n_X * \tan\alpha_i \times 2^{n_Y}$ gefüllt, und RYS ist als Addierer geschaltet, derart, daß nach jeder Suchzeile zu RYR der ganzzahlige Anteil von $s_y$ addiert wird, und zu RYR der Rest. Dabei steuert AS auch die Speicherung der während der Optimierung anfallenden Richtkriterien und Suchwinkel. Das jeweils letzte Richtkriterium wird AS aus einem Summenregister SQ nach jeweils einem Bilddurchlauf zugeführt. Der Bildtakt $T_B$ wird vom Zeilentakt $T_Z$ durch einen Zeilenteiler TZ abgeleitet (Verhältnis $z$:1; $z$=Anzahl der Bildzeilen).

Anschließend wird SQ gelöscht, und (RYS+RYR) sowie RY werden auf den Anfangswert – im allgemeinen 0 – zurückgesetzt. RXW sowie ein Wortsummenspeicher SW (s.u.) werden nach jeder Zeile auf den Anfangsstand zurückgesetzt. Vorher wird der Inhalt von SW in einen Speicher SW' (s.u) übertragen.

Der Inhalt von SQ wird wie folgt generiert:
Ein Punktintegrator PI bildet die Summe der am Ausgang A des Bildspeichers SP anliegenden Binärstellen, also die mittlere Helligkeit dieser $n_x$ Punkte, wenn 1 "schwarz" und 0 "weiß" bedeutet. (PI kann auch durch einen schnelle Zähler ersetzt werden, der an den Ausgang von PS angeschlossen ist). Diese Summe wird zum Inhalt des Wortsummenspeichers SW addiert. Ein Quadrierer Q bildet das Quadrat der Inhalte der beiden Speicher SW und SW' und addiert es mit dem Zeilentakt $T_Z$ zu dem Inhalt von SQ.

Die zuvor beschriebene Schaltung führt die Schrägabtastung nicht exakt durch, sondern approximiert sie treppenförmig mit der Stufenbreite $n_x$. Diese Appro-ximation verringert zwar die Schärfe des Richtkriteriums, ermöglicht jedoch seine Erzeugung mit verhältnismäßig wenigen und langsamen und damit kostengünstigen Schalteleementen.

Selbstverständlich kann ein beliebiger Anteil der Schaltung gemäß Fig. 4 mit Hilfe eines oder mehrerer Mikroprozessoren realisiert werden, sofern deren Geschwindigkeit ausreicht. Dies gilt insbesondere für den Schaltungsteil AS.

Die Speicherung der Suchwinkel $\alpha_i$ und der zugehörigen Richtkriterien $K_i$ erfolgt in besonders einfacher Weise dadurch,

– daß ein RAM-Speicherfeld SF mit p Plätzen $SF_0..SF_{p-1}$ vorgesehen wird, wobei p $> (\alpha_{max}] - \alpha_{min})/\delta_{min}$, das vor Beginn der Optimierung mit einem negativen Wert gefüllt wird

– und daß $K_i$ im Speicherplatz $SF_{(\alpha_i-\alpha_{min})/\delta_{min}}$ abgelegt wird.

Ob für einen bestimmten Suchwinkel $\alpha_i$ bereits ein Kriterium ermittelt wurde, kann dann einfach dadurch bestimmt werden, daß geprüft wird, ob der Inhalt des entsprechenden Speicherplatzes negativ ist.

Eine Variante der oben beschriebenen Verfahren ergibt sich daraus, daß die Koordinate u nicht in die Horizontale (d.i. die Richtung der Abtastzeilen, sondern in irgend eine andere bevorzugte Richtung gelegt wird. Entsprechend ändert sich dann die Bedeutung aller anderen Koordinaten sowie ihrer Fouriertransformierten. Eine solche Annahme ist dann sinnvoll, wenn bekannt ist, daß das abgetastete Objekt in dieser bevorzugten Richtung ausgeprägte Strukturen aufweist, beispielsweise in Richtung der Vertikalen.

Weist die Vorlage sowohl in Horizontal- als auch in Vertikalrichtung ausgeprägte Strukturen auf, so kann – bei erhöhtem Zeitaufwand – die Wirksamkeit des Verfahrens dadurch verbessert werden, daß bei der Schräglagenermittlung beide als bevorzugte Richtungen verwendet werden. Das heißt beispielsweise, daß für jeweils einen Suchwinkel $\alpha_i$ zwei Suchabtastungen durchgeführt werden, wobei einmal die Horizontale und einmal die Vertikale als bevorzugte Richtung angenommen wird, und daß aus einer Kombination, z.b. der Summe, der beiden dabei ermittelten Richtkriterien das für die Optimierung benötigte Richtkriterium gewonnen wird.

Patentansprüche:

1. Verfahren zur automatischen Schräglagenkorrektur bei der Erfassung einer Textvorlage in Form digitaler Abtastwerte zum Zweck einer Weiterverarbeitung, dadurch gekennzeichnet , daß die Abtastwerte vor der Weiterverarbeitung in einem ersten Schritt einer Schräglagenermittlung und in einem zweiten Schritt einer elektronischen Drehung interzogen werden.

2. Verfahren nach Anspruch 1, dadurch gekennzeichnet , daß der Winkel der Schräglage nach einem vorgegebenen Optimierungsverfahren durch Generieren einer Folge systematisch ausgewählter Suchwinkel $\alpha_i$ (i=0,1,...) und diesen Suchwinkeln zugeordneter Richtkriterien $K_i$ ermittelt und für die elektronische Drehung verwendet wird.

3. Verfahren nach Anspruch 2, dadurch gekennzeichnet , daß als Optimierungsverfahren eine Intervallschachtelung verwendet wird.

4. Verfahren nach einem der vorhergehenden Ansprüche, dadurch gekennzeichnet , daß die Ermittlung des einem Suchwinkel $\alpha_i$ zugeordneten Richtkriteriums $K_i$ derart erfolgt, daß für jeden Suchwinkel $\alpha_i$ eine zeilenweise Abtastung (Suchabtastung) in einer Richtung simuliert wird, die mit einer bevorzugten Richtung den Suchwinkel einschließt und einer Drehung um diesen Suchwinkel entspricht, daß für jede der dabei abgetasteten Zeilen (Suchzeilen) die Summe der Abtastwerte längs der jeweiligen Suchzeile oder ein Näherungswert dieser Summe erzeugt und gespeichert wird, daß jeweils vor der Speicherung der zweiten und jeder folgenden dieser Summen eine gerade, monoton nichtabnehmende Funktion der Differenz zwischen dieser und der zuletzt gespeicherten Summe, vorzugsweise das Quadrat dieser Differenz, gebildet und zum Inhalt eines Registers addiert wird, das vor Beginn der jeweiligen Suchabtastung auf den Wert 0 gesetzt wurde, und daß der Inhalt des Registers nach Beendigung der Suchabtastung als der gesuchte Wert des Richtkriteriums $K_i$ verwendet wird.

5. Verfahren nach Anspruch 4, dadurch gekennzeichnet , daß die Suchabtastung dadurch vereinfacht wird, daß die Drehung durch eine Scherung ersetzt wird.

6. Verfahren nach Anspruch 4, dadurch gekennzeichnet, daß die Erzeugung der Summe dadurch erfolgt, daß mit Hilfe eines Lauflängendetektors für jede Suchzeile Folgen von Schwarzlängen in Gestalt digitaler Datenworte ermittelt werden und daß diese Datenworte einem Addierer zugeführt werden.

7. Verfahren nach Anspruch 6, dadurch gekennzeichnet, daß ein zu anderen Zwecken vorhandener Lauflängendektektor verwendet wird.

8. Verfahren nach einem der Ansprüche 1 bis 3, dadurch gekennzeichnet, daß die Ermittlung des einem Suchwinkel $\alpha_i$ zugeordneten Richtkriteriums $K_i$ derart erfolgt, daß längs eines Suchstrahls, der mit der Fouriertransformierten der bevorzugten Richtung den Suchwinkel einschließt, die durch die Koeffizienten des Fourier-Leistungsspektrums gegebene spektrale Leistungsdichte integriert wird.

9. Verfahren nach Anspruch 8, dadurch gekennzeichnet, daß die Integration auf einen oder mehrere Teilbereiche des Suchstrahls beschränkt wird, bei Textvorlagen mit im wesentlichen konstantem Textzeilenabstand vorzugsweise auf die Umgebung eines Maximums, dessen Lage durch den Abstand der Textzeilen gegeben ist.

10. Verfahren nach Anspruch 8 und 9, dadurch gekennzeichnet, daß die Integration durch eine Summenbildung ersetzt wird.

11. Verfahren nach Anspruch 8, dadurch gekennzeichnet, daß die Koeffizienten des Fourier-Leistungsspektrums vor der Ermittlung des ersten Suchwinkels dadurch gewonnen werden, daß durch eine zweidimensionale vorzugsweise "schnelle" Fouriertransformation der Abtastwerte die Fourierkoeffizienten ermittelt und die Quadrate ihrer Beträge gespeichert werden.

12. Verfahren nach einem der vorhergehenden Ansprüche, dadurch gekennzeichnet, daß zu summierende Abtast- oder Leistungsspektrumswerte durch Interpolation ermittelt werden.

13. Verfahren nach Anspruch 1 bis 11, dadurch gekennzeichnet, daß zu summierende Abtast- oder Leistungsspektrumswerte durch Werte ersetzt werden, die für Koordinaten bzw. Frequenzen gelten, die durch Runden ermittelt werden.

14. Verfahren nach einem der vorhergehenden Ansprüche, dadurch gekennzeichnet , daß als bevorzugte Richtung die Horizontale verwendet wird.

15. Verfahren nach einem oder mehreren der Ansprüche 1 bis 13, dadurch gekennzeichnet , daß als bevorzugte Richtung die Vertikale verwendet wird.

16. Verfahren nach einem oder mehreren der Ansprüche 1 bis 13, dadurch gekennzeichnet , daß als bevorzugte Richtung sowohl die Horizontale als auch die Vertikale verwendet werden, wobei das einem bestimmten Suchwinkel zugeordnete Richtkriterium aus einer Kombination der für die jeweiligen bevorzugten Richtungen ermitelten Richtkriterien gewonnen wird.

17. Einrichtung mit zumindest einem Bildspeicher und einem Bildschirm, dadurch gekennzeichnet , daß Mittel zur Durchführung eines Verfahrens zur automatischen Schräglagenkorrektur nach den vorhergehenden Ansprüchen vorgesehen sind.

18. Einrichtung nach Anspruch 17, bei der ein mit einem Bildpunkttakt ausgelesener Bildwiederholspeicher mit einem ersten und einem zweiten Adreßeingang, ein an dessen Ausgang angeschlossener Parallel–Serien–Umsetzer und ein an diesen angeschlossener Monitor vorgesehen sind, dadurch gekennzeichnet , daß der Ausgang des Bildwiederholspeichers (SP) mit einem Punktintegrator (PI) verbunden ist, der die Summe der parallel anliegenden Binärstellen bildet und an den Eingang eines Wortsummenspeichers (SW) liefert, daß ein vom Bildpunkttakt (T) mittels eines Punktteilers (TP) abgeleiteter Worttakt (Tp) einerseits einem X–Wort–Zählregister (RXW), dessen Ausgang an den ersten Adreßeingang (XW) des Bildwiederholspeichers (SP) angeschlossen ist, und andererseits einem als Addierer ausgebildeten Schrägabtastregister (RYS+RYR) zugeführt wird, dessen Inhalt im normalen Bildausgabebetrieb mit seinem höherwertigen Teil (RYS) über einen Umschalter S auf dem Stand eines mit einem von einem Wortteiler (TW) aus dem Worttakt (Tp) gewonnenen Zeilentakt (TZ) inkrementierten Y–Registers (RY) gehalten, während einer Suchabtastung hingegen mit jedem von dem Punktteiler (TP) ausgegebenen Taktimpuls um den Inhalt eines Y–Inkrementregisters (IY) erhöht wird, dessen Eingang mit dem Ausgang einer Abtaststeuerung (AS) verbunden ist, an deren ersten Eingang ein von einem Zeilenteiler (TZ) aus dem Zeilentakt (TZ) abgeleiteter Bildtakt (TB) geführt wird und deren zweiter Eingang mit dem Ausgang eines Summenregisters (SQ) verbunden ist, dessen Eingang mit

0176910

84 P 1792 E

einem Quadrierer (Q) verbunden ist, der das Quadrat der Differenz der Inhalte des Wortsummenspeichers (SW) und eines Speichers (SW') bildet und es mit dem Zeilentakt (T$_Z$) zum Inhalt des Summenregisters (SQ) addiert, daß nach jeder Bildzeile bzw. nach der Quadratbildung der Inhalt des Wortsummenspeichers (SW) in den Speicher (SW') übertragen wird, daß anschließend das X-Wort-Zählregister (RXW) sowie der Wortsummenspeicher (SW) auf einen vorgegebenen Anfangszustand zurückgesetzt werden und daß nach jedem Bilddurchlauf das Summenre- gister (SQ) gelöscht wird.

FIG 1

FIG 2

FIG 3

Eingabe i=0, $\alpha_0$, $\delta$
$\delta_{min}$, $\alpha_{min}$, $\alpha_{max}$

$\alpha_i \in \{\alpha_0 .. \alpha_{i-1}\}$   J

N

Generiere $K(\alpha_i)$
Speichere $K(\alpha_i)$, $\alpha_i$

Hole $K(\alpha_i)$ von
K-Speicher

$K(\alpha_i) < K(\alpha_{i-1})$
?   N

J

$\delta \leftarrow -\delta/2$

$|\delta| < \delta_{min}$
?   J

N

i $\leftarrow$ i+1

$\alpha_{i+1} \leftarrow \alpha_i + \delta$

$\alpha_{min} <=$
$\alpha_{i+1} <= \alpha_{max}$
?   J

N

$\alpha \leftarrow \alpha_j$
$K_j >= K_k | k <= i$

FIG 4

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | PATENTS ABSTRACTS OF JAPAN, Band 6, Nr. 148 (P-133)[1026], 7. August 1982; & JP - A - 57 69372 (NIPPON DENSHIN DENWA KOSHA) 28.04.1982 * Insgesamt * | 1,4 | G 06 K 9/32 |
| A | EP-A-0 020 897 (IBM) * Zusammenfassung * | 1,4 | |
| A | US-A-3 982 227 (R.E. JOYNSON et al.) * Zusammenfassung * | 8 | |
| A | IBM JOURNAL OF RESEARCH & DEVELOPMENT, Band 27, Nr. 4, Juli 1983, Seiten 386-399, Armonk, N.Y., US; R.G. CASEY et al.: "A processor-based OCR system" * Seite 389, linke Spalte, Absätze 3-6 * | 1,4 | **RECHERCHIERTE SACHGEBIETE (Int. Cl.4)** G 06 K G 06 F H 04 N |
| A | PATENTS ABSTRACTS OF JAPAN, Band 8, Nr. 51 (P-259)[1488], 8. März 1984; & JP - A - 58 201182 (NIPPON DENSHIN DENWA KOSHA) 22.11.1983 * Insgesamt * | 8 | |

Der vorliegende Recherchenbericht wurde für alle Patentansprüche erstellt.

| Recherchenort | Abschlußdatum der Recherche | Prüfer |
|---|---|---|
| DEN HAAG | 03-01-1986 | SONIUS M.E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82